# EUROPEAN PATENT APPLICATION

(11) **EP 4 202 338 A1**
(43) Date of publication of application: **28.06.2023**
(21) Application number: 21217744.8
(22) Date of filing: 24.12.2021
(51) Int. Cl.: F25J 1/00

(54) **PROCESS AND APPARATUS FOR THE RECOVERY OF BOIL-OFF GAS FROM THE LIQUEFACTION OF HYDROGEN**

(71) Applicant: L'Air Liquide, société anonyme pour l'Étude et l'Exploitation des procédés Georges Claude, 75007 Paris (FR)
(72) Inventor: DIAS, Florence, 94503 CHAMPIGNY SUR MARNE (FR); FARGES, Oriane, 94503 CHAMPIGNY SUR MARNE (FR); GRANADOS, Ludovic, 94503 CHAMPIGNY SUR MARNE (FR); PAGES, Baptiste, 94503 CHAMPIGNY SUR MARNE (FR)
(74) Representative: Air Liquide

(57) **Abstract**

A hydrogen boil-off gas recovery method, comprises liquefying hydrogen (1) by cooling a hydrogen feed stream in a first cryogenic cold box (80K CB), further cooling the hydrogen in a second cryogenic cold box (20K CB), liquefying the hydrogen in the second cryogenic cold box or downstream thereof, providing liquefied hydrogen a loading bay containing at least one hydrogen transport truck, sending boil-off gas (BOG1) from at least one hydrogen transport truck in the loading bay to which liquefied hydrogen has been provided to an indirect heat exchanger (BOG HEATER) outside the first and second cryogenic cold boxes in order to warm the boil-off gas and mixing at least part of the warmed boil-off gas with the hydrogen feed stream upstream of the first cryogenic cold box and/or with hydrogen in a hydrogen refrigeration cycle (LP H2 COMP) used to provide refrigeration for the second cryogenic cold box.

## Description

The present invention relates to a process and an apparatus for the recovery of boil-off gas from liquefaction of hydrogen. Liquefied hydrogen is generally transferred through a loading bay to supply one or more hydrogen transport trucks for the transportation of liquid hydrogen.

The hydrogen transport truck filling duration (or Boil-Off Gas (BOG) recovery capacity is today limited by the flexibility of the overall hydrogen liquefaction system (including the hydrogen production system) that requires the speeds of hydrogen transport truck depressurization and filling (or the amount of recoverable BOG) to be limited, because the flow of BOG sent back to any BOG recovery system needs to match the ramp-up and ramp-down speeds of the complete system in order to maximise the recovery rate.

According to an object of the invention, there is a provided a hydrogen boil-off gas recovery method, comprising liquefying hydrogen by cooling a hydrogen feed stream at a first pressure in a first cryogenic cold box, further cooling the hydrogen in a second cryogenic cold box, liquefying the hydrogen in the second cryogenic cold box or downstream thereof, providing liquefied hydrogen to a storage or a loading bay containing at least one hydrogen transport truck, sending boil-off gas from at least one hydrogen transport truck in the loading bay to which liquefied hydrogen has been provided to an indirect heat exchanger outside the first and second cryogenic cold boxes in order to warm the boil-off gas and mixing at least part of the warmed boil-off gas with the hydrogen feed stream upstream of the first cryogenic cold box and/or with hydrogen in a hydrogen refrigeration cycle used to provide refrigeration for the second cryogenic cold box.

Optionally:
- the second cryogenic cold box is refrigerated using the hydrogen refrigeration cycle and if the boil-off gas from the at least one hydrogen transport truck has a flowrate less than a given threshold, all the warmed boil-off gas from the at least one hydrogen transport truck is sent to the hydrogen refrigeration cycle and if the boil-off gas from the at least one hydrogen transport truck has a flowrate more than the given threshold at least part of the warmed boil-off gas from the at least one hydrogen transport truck is mixed with the hydrogen feed stream upstream of the first cryogenic cold box.
- the at least part of the warmed boil-off gas is compressed in a dedicated compressor before being mixed with the hydrogen feed stream.
- at least part of the warmed boil-off gas is compressed to the first pressure after being mixed with the hydrogen feed stream.
- the hydrogen feed stream is generated by a hydrogen generation unit and sent to the first cryogenic cold box in a first amount if warmed boil-off gas is not mixed with the hydrogen feed stream and if warmed boil-off gas is mixed with the hydrogen feed stream, the amount of hydrogen feed stream sent from the hydrogen generation unit to the first cryogenic cold box is reduced to a second amount, smaller than the first amount.
- if the boil-off gas stream from at least one hydrogen transport truck is below a previously determined pressure and/or below a previously determined temperature, at least part of the boil off gas stream is warmed in a first heater and mixed with a hydrogen refrigeration cycle stream and if the boil-off gas stream from at least one hydrogen transport truck is above a previously determined pressure and/or above a previously determined temperature, at least part of the boil off gas stream from at least one hydrogen transport truck is warmed in a second heater and mixed with a hydrogen feed stream upstream of the first cryogenic cold box.
- the previously determined pressure is between 1,5 and 3 bars, preferably equal to 2 bars.
- the previously determined temperature is between -180°C and -210°C, preferably equal to -200°C.
- if the boil-off gas stream from at least one hydrogen transport truck is below the previously determined pressure but above the previously determined temperature, the boil off stream is heated in the first heater and returned to the hydrogen refrigeration cycle.
- if the boil-off gas stream from at least one hydrogen transport truck is below the previously determined pressure and below the previously determined temperature, the boil off stream is not heated in the first or second heater and is heated in a heat exchanger of the first and/or second cryogenic cold box to cool the hydrogen feed stream to be liquefied.
- the boil-off gas from the at least one hydrogen transport truck is rich in hydrogen.

According to another aspect of the invention, there is provided a hydrogen liquefier and a boil-off gas recovery apparatus, comprising a liquefier for liquefying hydrogen comprising a first cryogenic cold box for cooling a hydrogen feed stream at a first pressure and a second cryogenic cold box for further cooling the hydrogen so as to liquefy the hydrogen in the second cryogenic cold box or downstream thereof, a loading bay containing at least one hydrogen transport truck, means for providing liquefied hydrogen to a storage or a loading bay containing at least one hydrogen transport truck, to an indirect heat exchanger outside the first and second cryogenic cold boxes, means for sending boil-off gas from at least one hydrogen transport truck in the loading bay to which liquefied hydrogen has been provided to the indirect heat exchanger in order to warm the boil-off gas and means for mixing at least part of the warmed boil-off gas with the hydrogen feed stream upstream of the first cryogenic cold box and/or with hydrogen in a hydrogen refrigeration cycle used to provide refrigeration for the second cryogenic cold box.

### Optionally

- the second cryogenic cold box comprises a hydrogen refrigeration cycle and including means for detecting the flowrate of the boil-off gas from the at least one hydrogen transport truck and for sending the warmed boil-off gas from the at least one hydrogen transport truck is sent to the hydrogen refrigeration cycle only if the warmed boil-off gas has a flowrate less than a given threshold.
- means for detecting the flowrate of the boil-off gas from the at least one hydrogen transport truck and means for mixing at least part of the warmed boil-off gas from the at least one hydrogen transport truck with the hydrogen feed stream upstream of the first cryogenic cold box only if the boil-off gas from the at least one hydrogen transport truck has a flowrate more than a given threshold.
- means for detecting the pressure of a boil-off gas stream from at least one hydrogen transport truck, a first heater, a second heater, means for sending the boil-off gas stream from at least one hydrogen transport truck to the first heater if the detected pressure is below a previously determined pressure, means for sending the boil-off stream warmed In the first heater to be mixed with a refrigeration cycle and means for sending the boil-off gas stream from at least one hydrogen transport truck to the second heater if the detected pressure is above a previously determined pressure and means for sending the boil-off stream warmed In the second heater to be mixed with a hydrogen feed stream upstream of the first cryogenic cold box.
- means for detecting the temperature of a boil-off gas stream from at least one hydrogen transport truck, a first heater, a second heater, means for sending the boil-off gas stream from at least one hydrogen transport truck to the first heater if the detected temperature is below a previously determined pressure, means for sending the boil-off stream warmed in the first heater to be mixed with a refrigeration cycle and means for sending the boil-off gas stream from at least one hydrogen transport truck to the second heater if the detected temperature is above a previously determined pressure and means for sending the boil-off stream warmed In the second heater to be mixed with a hydrogen feed stream upstream of the first cryogenic cold box.

According to the invention, the recovery of the BOG can be maximized by using those H2 molecules in any one of three different ways:
- Sending the boil-off to the liquefier(s) (depending on the global plant configuration several liquefier trains can be implemented), after heating the boil-off, for compression and re-liquefaction.
- Sending the boil-off upstream of the liquefier(s), specifically at compression trains inlet.
- Valorizing cold BOG directly in the liquefier to benefit from its frigorific power.

For such a configuration, separating the BOG depending on its pressure level and/or temperature conditions and designing the compression trains capacities in consistency with the hydrogen transport truck operations is the key. The process control philosophy of the whole system is based on adaptability of H2 feedstock load "following" the BOG generation.

This invention allows the duration of the hydrogen transport truck filling sequence to be reduced (or the volume of recovered BOG to be maximized) by controlling the feed flow rate (at the inlet of the hydrogen liquefaction system) with the BOG flow rate (by turning down the production capacity of hydrogen generation unit (or Feed flow rate) simultaneously with the recovery of BOG).

This process allows also to mutualize the flexibility of all compressors and hydrogen generation system by separating the BOG depending on its pressure level and temperature conditions in order route it to different tie-in points with different inlet pressures to maximize the flexibility of the integrated liquefaction system and speed up the filling sequence of the hydrogen transport trucks or increase the recovery of BOG.

Hydrogen liquefaction is an expensive process and BOG recovery of vaporized hydrogen molecules is extremely valuable, especially when the gaseous hydrogen is produced at a high cost, for example by electrolysis. BOG generation generally occurs through the liquefier cold end flash, LH2 piping, LH2 storage, during the hydrogen transport truck loading process and afterwards during the delivery of the liquid hydrogen.

The invention will now be described in greater detail with reference to the figures:
Figure 1 illustrates a boil-off recovery process where boil-off gas is recycled to the hydrogen refrigeration cycle.
Figure 2 illustrates a boil-off recovery process where boil-off gas is recycled to the hydrogen feed compressor.
Figure 3 illustrates a single train boil-off recovery process where boil-off gas is recycled to the hydrogen feed compressor and to the hydrogen refrigeration cycle.
Figure 4 illustrates a double train boil-off recovery process where boil-off gas is recycled to the hydrogen feed compressor and to the hydrogen refrigeration cycle.
Figure 5 illustrates a single train boil-off recovery process where boil-off gas is recycled to the hydrogen feed compressor, following an additional compression step, and to the hydrogen refrigeration cycle.

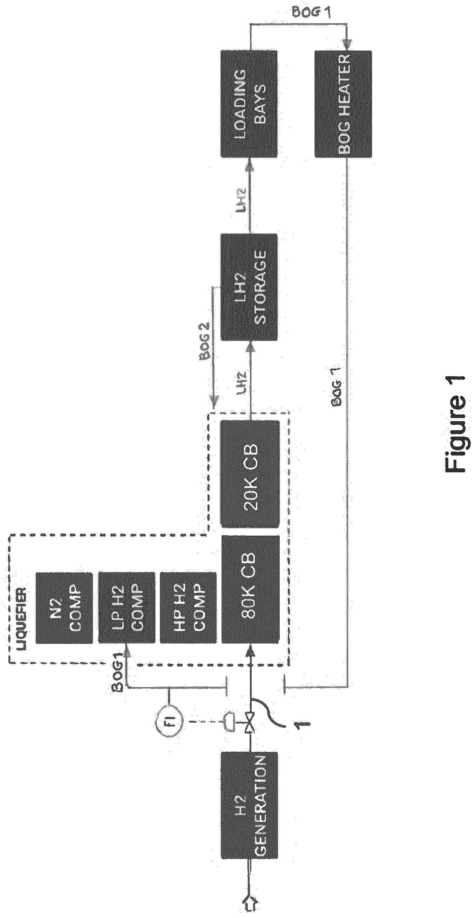

There are different ways to recover the BOG from those different areas of the plant (liquefier, storage and loading). Figure 1 below shows a method of BOG recovery.

The hydrogen (1) can be generated by a steam methane reformer (SMR) or electrolysis or any other known means, indicated on the figure as H2 Generation. Hydrogen (1) can also come from an industrial complex off-gas or from a pipeline. Once free of any components that may freeze in the downstream cold box, it enters the liquefier.

In Figure 1, the liquefier uses a pre-cooling cycle (typically nitrogen). The liquefier comprises a first cryogenic cold box which is an 80K Cold Box (80K CB) cooled down using a N2 refrigeration cycle with N2 compression (N2 COMP) and a second cryogenic cold box which is a 20K Cold Box (20K CB) using a separate Hydrogen liquefaction cycle. The Hydrogen refrigeration cycle uses an LP compressor (LP H2 COMP) and a HP compressor (HP H2 COMP) to compress the cycle hydrogen. Other types of refrigeration cycle may of course be used, such as mixed refrigerant cycles, using for example mixtures of nitrogen and hydrocarbons, in addition to or instead of the cycles mentioned.

Once liquefied within or downstream the 20K cold box, the liquid hydrogen is stored, typically in vacuum insulated storage bullet tank(s) LH2 STORAGE or a sphere depending on the capacity. Downstream of the storage LH2 STORAGE is the loading area LOADING BAYS which includes multiple loading bays and sometimes transfer pumps. In the loading bay, at least one truck is present, to be filled or having been filled with liquefied hydrogen. The term 'loading bay' is thus a convenient manner of referring to the at least one hydrogen transport truck present therein. Figure 1 also shows the main BOG routings. For example, the boil-off gas BOG2 generated between the 20K Cold Box and through the storage tank LH2 STORAGE is generally recycled back into the cold end of the liquefier. Downstream the storage, at the loading bay, liquid and vapor phases from the hydrogen transport truck (or trucks) are both connected to the plant. Hence, the vapor phase BOG1 from the hydrogen transport truck is collected through the BOG network and is typically warmed up through a BOG heater by indirect heat exchange and recycled to the LP Compressor (LP H2 COMP) used to compress the refrigeration cycle hydrogen for the 20K cold box. The flow BOG1 is then mixed with the H2 cycle flow. This BOG heater typically uses an external fluid, such as steam or water to warm the BOG. Thus in this case, the gas BOG1 is warmed outside the liquefier and sent to the liquefier at the appropriate temperature to be mixed with the cycle gas.

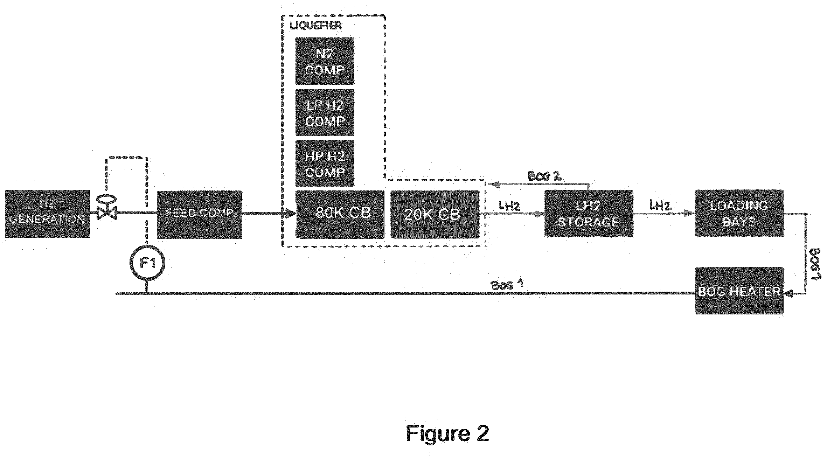

In Figure 2, the H2 generation takes place at relatively low pressure (for example in the case of electrolysis) and a feed gas compressor (FEED COMP) is required upstream of the liquefier to compress the hydrogen 1 generated in the hydrogen generation unit. In this case the BOG2 generated during the loading process is warmed up through the BOG heater, similar to that of Figure (1) using an external fluid, and is recycled back into the Feed Gas Compressor (FEED COMP). The main difference with Figure 1 is that the hydrogen transport truck boil off gas BOG2 is recycled into the feed line whereas Figure 1 recycles the BOG into the H2 refrigeration loop. This has the advantage of recycling the boil-off BOG1 without affecting the liquefier operation. Also, another advantage is that the BOG flow does not affect the rated flow of the Feed gas Compressor train(s) capacity since the H2 generation unit can be turned down by the same amount to ensure that the feed gas compressor FEED COMP always sees a constant flowrate. Generally, however, the Feed Gas Compressor FEED COMP may be located even farther from the loading bay from which the BOG originates than the LP compressor LP H2 COMP. The distance between the loading area and the Feed compressor may be a concern as regards the maximum allowable pressure drop as the return BOG pressure may be extremely low (1 to 2 bara).

This invention focuses on the BOG generation and recovery from the loading area. The BOG generated in the loading area presents many challenges:
The BOG amount when the hydrogen transport truck returns to the loading bay depends on the logistics chain, delivery method, distance to customers, number of customers delivered, billing method etc.

BOG generation can be diverse and includes the following:
- Hydrogen transport truck depressurization: in case of a hydrogen transport truck arriving on site at high pressure with a residue of liquid H2 stored onboard.
- Hydrogen transport truck filling. This operation will generate gaseous hydrogen return at low pressure
- "Natural heat release" around the storage systems

Valorizing all the type of BOG using the process according to Figure 1 within the liquefier by reducing the load of the H2 generation system could lead to the following disadvantages:
- Huge overdesign of the liquefier's compression train(s) and it could be difficult to force a wide range of ramp up/ramp down on liquefier's machines
- Process upset on liquefier in order to manage this additional peak.

Managing the BOG only with the solution of Figure 2 would also be challenging as it would lead to:
- Valorisation of BOG above a certain minimum pressure (leading to a loss BOG at low pressure resulting for instance from natural heat ingress on storages)
- Forcing a wide range of ramp up/ramp down on Feed gas compression train(s). Note that the addition of a buffer to handle this ramp/up difficulty is costly BOG recovery with such schemes is typically limited to -70%.

It is important to note that when the BOG is recycled to the liquefier, the feed gas flowrate is reduced by the same amount. Hence, BOG recovery is even more valuable when the H2 generation comes at a high OPEX cost as in the case of electrolysis.

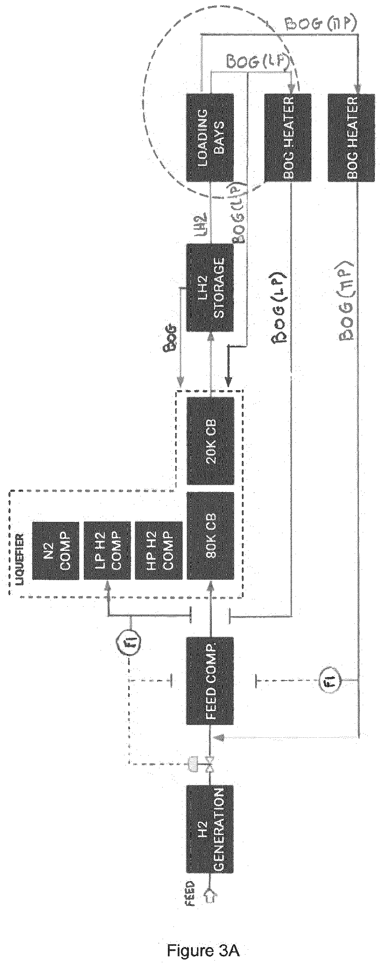

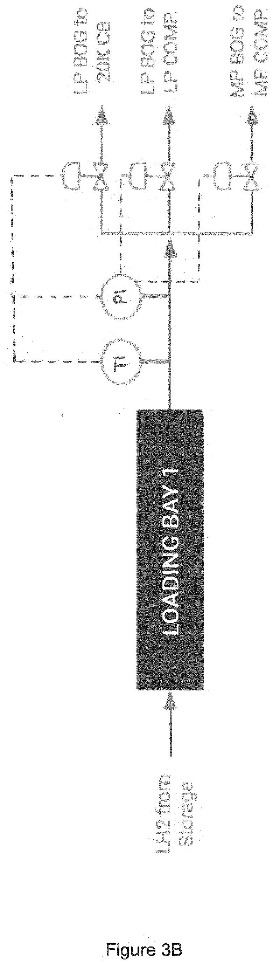

One embodiment of the proposed invention as shown in Figures 3A and 3B is typically applicable for liquefaction trains from about 5 to about 80 tpd. In this embodiment, three different BOG networks are created and the high pressure BOG recovery network or networks are separated from the low pressure BOG recovery networks:
- The BOG generated during the filling of the truck (at a pressure of < 2 bara, for example) can generally be routed either to the warm end of the LP cycle compressor as in the case of Figure 1.
- Since the BOG recovery pressure in that network is limited, the BOG temperature leaving the truck is better managed. Hence, it would be much easier to recover the LP BOG at the cold end of the liquefier, in a similar fashion to what is done for the storage boil off gas BOG2.
- The BOG generated during the depressurization are at a higher pressure (∼2 to 10 bara) and can be routed to the feed gas compressor.
- Each BOG network can be connected to every loading bay.

Thus Figure 3A shows that the low pressure boil-off gas BOG (LP) at below a given pressure (here 2 bars) is either heated in a first external heater BOG HEATER and sent to the inlet of a compressor of the hydrogen refrigeration cycle (if the return temperature is above a given temperature; here -200°C) or directly routed to the liquefier cold end to be recovered through the hydrogen cooling cycle and is heated in a heat exchanger of the first and/or second cryogenic cold box to cool the hydrogen feed stream to be liquefied (if return temperature is below a given temperature; here - 200°C) and high pressure boil-off gas BOG (MP) at above a given pressure (here 2 bars, for example between 2 and 10 bars) is heated in a second heater BOG HEATER and sent to the inlet of the feed compressor upstream of the liquefier.

As shown in Figure 3B, the loading bay containing at least one hydrogen transport truck produces a boil- off gas whose pressure and/or temperature is detected such that if the pressure and/or the temperature is below a predetermined value, at least one inlet valve to at least one low pressure circuit is opened and an inlet valve to a high pressure circuit is closed. Thus the low pressure boil-off gas at, for example, less than 2 bars, is sent via the low pressure circuit to the low pressure heater and thence to the hydrogen refrigeration circuit. If the pressure and/or the temperature is above a predetermined value, at least one inlet valve to at least one low pressure circuit is closed and an inlet valve to a high pressure circuit is opened. Thus the higher pressure boil-off gas at, for example, between 2 and 10 bars, is sent via the higher pressure circuit to the hydrogen feed stream, preferably being compressed in the feed compressor FEED COMP to the first pressure.

The advantages of the process are as follows:
- The operating range of the compressor LP H2 COMP of the hydrogen refrigeration cycle is much reduced and the compressor design is simplified. -The compressor LP H2 COMP can easily operate considering zero BOG returning to the liquefier but also can perform well if multiple hydrogen transport trucks are being filled simultaneously. The ramp-up and down between the running cases with or without BOG recovering is therefore reduced and the reactivity of the cycle compressor LP H2 COMP is enhanced.
- The liquefier production capacity becomes independent of the hydrogen transport truck BOG recycle to the LP machine since LP BOG represent a much smaller and much more stable flow.
- As mentioned above, the Feed gas compressor system design can handle the depressurization BOG by reducing the production of the upstream H2 generation unit. The BOG flow is typically much smaller compared to the nominal capacity of the feed compressor, hence the depressurization BOG flow can be increased and the depressurization time decreased. In this way, the entire loading process duration might be reduced to the point that it may be possible to consider one less loading bay for the design of the plant. The ramping up and down of the integrated system to recover depressurization BOG is therefore taking advantage of the mutualized flexibility of the hydrogen generation system as well as from the feed compressor.
- BOG recovery is maximized (up to more than 90% recovery) and the sizing of the equipment is very little dependent on the BOG flowrate recycled.

It will be appreciated that the liquefaction process may be producing liquid hydrogen to be sent to a storage tank or to a hydrogen transport truck whilst BOG is recovered from the storage tank and/or the hydrogen transport truck being filled and/or another hydrogen transport truck, e.g. a truck returning to the facility after delivering liquid hydrogen but still containing BOG.

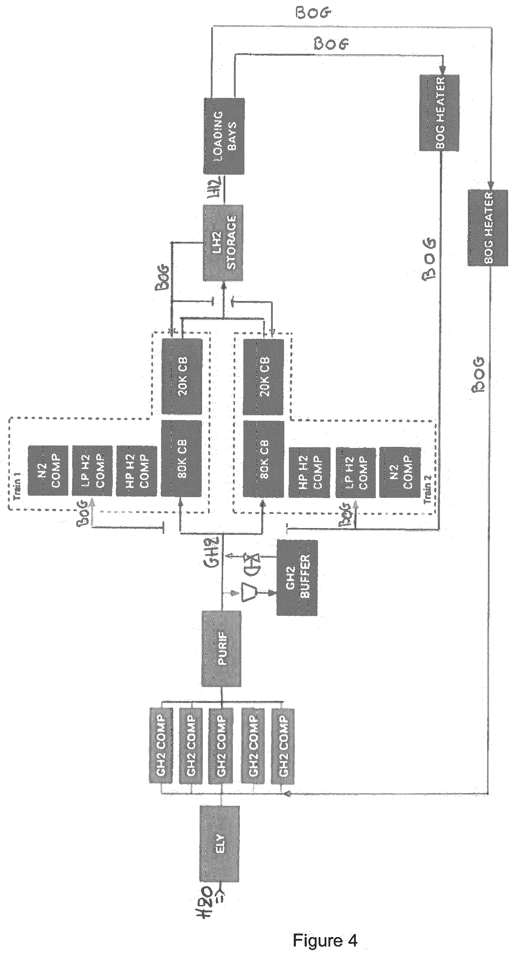

Figure 4 is similar to Figure 3 except that it includes two liquefaction trains, each having the same elements as the liquefier of Figure 3. Water H2O feeds an electrolysis unit ELY to produce a feed stream of hydrogen which is compressed in a plurality of parallel compressors GH2 COMP, upstream of a common purification unit PURIF to remove any impurities which might freeze in the cold box. If necessary, gaseous hydrogen may be stored in a hydrogen buffer GH2 BUFFER.

The BOG system for both trains are connected. The benefit of the invention when there are multiple liquefaction trains is that the BOG recovery is quasi-independent of whether or not one liquefaction train is shut down. A single loading bay is fed from the two liquefaction trains.

When the loading bay containing at least one truck produces a boil- off gas whose pressure and/or temperature is detected such that if the pressure and/or the temperature is below a predetermined value, at least one inlet valve to at least one low pressure circuit is opened and an inlet valve to a high pressure circuit is closed.

Thus the low pressure boil-off gas at, for example, less than 2 bars, is sent via the low pressure circuit to the low pressure heater and thence to the hydrogen refrigeration circuits of the two liquefaction trains. If the pressure and/or the temperature is above a predetermined value, at least one inlet valve to at least one low pressure circuit is closed and an inlet valve to a high pressure circuit is opened. Thus the higher pressure boil-off gas at, for example, between 2 and 10 bars, is sent via the higher pressure circuit to the hydrogen feed stream which feeds both liquefier trains, preferably being compressed in the five parallel compressors GH2 COMP.

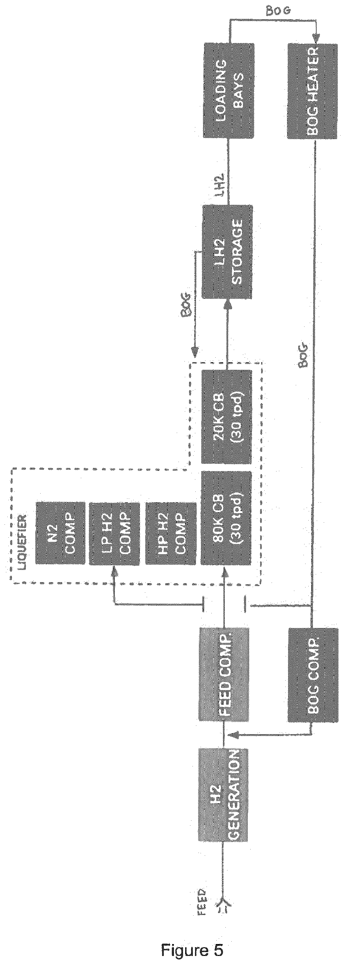

Figure 5 is an alternative solution to Figure 3 above. In Figure 5, the LP and HP BOG streams are combined similarly to Figure 1 or Figure 2, so that there is a single boil-off gas stream heated in the boil-off heater BOG HEATER, by heat exchange with an external stream. Since the average BOG flow of a truck during an entire loading sequence is so small, and depressurization BOG peaks are more rare, it makes sense that the BOG is preferentially sent to the hydrogen refrigeration cycle, for example to the inlet of the LP compressor LP H2 COMP of the hydrogen refrigeration cycle.

In the case of peak BOG flow, for example during depressurization of a truck, a BOG compressor is added in order to recycle the extra BOG flow to the hydrogen liquefaction system feed inlet by increasing the pressure of the extra BOG flow up to the suction pressure of the feed process (typically in the above scheme, up to the suction of the feed compressor FEED COMP). For this a dedicated boil-off compressor BOG COMP is used.

## Claims

1. A hydrogen boil-off gas recovery method, comprising liquefying hydrogen (1) by cooling a hydrogen feed stream at a first pressure in a first cryogenic cold box (80K CB), further cooling the hydrogen in a second cryogenic cold box (20K CB), liquefying the hydrogen in the second cryogenic cold box or downstream thereof, providing liquefied hydrogen to a storage or a loading bay containing at least one hydrogen transport truck, sending boil-off gas (BOG1) from at least one hydrogen transport truck in the loading bay to which liquefied hydrogen has been provided to an indirect heat exchanger (BOG HEATER) outside the first and second cryogenic cold boxes in order to warm the boil-off gas and mixing at least part of the warmed boil-off gas with the hydrogen feed stream upstream of the first cryogenic cold box and/or with hydrogen in a hydrogen refrigeration cycle (LP H2 COMP) used to provide refrigeration for the second cryogenic cold box.

2. A method according to claim 1 wherein the second cryogenic cold box (20K CB) is refrigerated using the hydrogen refrigeration cycle and in which if the boil-off gas (BOG1) from the at least one hydrogen transport truck has a flowrate less than a given threshold, all the warmed boil-off gas from the at least one hydrogen transport truck is sent to the hydrogen refrigeration cycle and if the boil-off gas from the at least one hydrogen transport truck has a flowrate more than the given threshold at least part of the warmed boil-off gas from the at least one hydrogen transport truck is mixed with the hydrogen feed stream (1) upstream of the first cryogenic cold box (80K CB).

3. A method according to claim 2 wherein the at least part of the warmed boil-off gas (BOG1) is compressed in a dedicated compressor before being mixed with the hydrogen feed stream (1).

4. A method according to any preceding claim wherein at least part of the warmed boil-off gas (B0G1) is compressed to the first pressure after being mixed with the hydrogen feed stream (1).

5. A method according to any preceding claim wherein the hydrogen feed stream (1) is generated by a hydrogen generation unit (H2 GENERATION, ELY) and sent to the first cryogenic cold box (80K CB) in a first amount if warmed boil-off gas (BOG1) is not mixed with the hydrogen feed stream and if warmed boil-off gas is mixed with the hydrogen feed stream, the amount of hydrogen feed stream sent from the hydrogen generation unit to the first cryogenic cold box is reduced to a second amount, smaller than the first amount.

6. A method according to any preceding claim wherein if the boil-off gas stream (BOG(LP)) from at least one hydrogen transport truck is below a previously determined pressure and/or below a previously determined temperature, at least part of the boil off gas stream is warmed in a first heater and mixed with a hydrogen refrigeration cycle stream and if the boil-off gas stream (BOG(MP)) from at least one hydrogen transport truck is above a previously determined pressure and/or above a previously determined temperature, at least part of the boil off gas stream from at least one hydrogen transport truck is warmed in a second heater and mixed with a hydrogen feed stream upstream of the first cryogenic cold box.

7. A method according to Claim 6 wherein the previously determined pressure is between 1,5 and 3 bars, preferably equal to 2 bars.

8. A method according to Claim 6 or 7 wherein the previously determined temperature is between -180°C and -210°C, preferably equal to -200°C.

9. A method according to Claim 6,7 or 8 wherein if the boil-off gas stream (BOG) from at least one hydrogen transport truck is below the previously determined pressure but above the previously determined temperature, the boil off stream is heated in the first heater and returned to the hydrogen refrigeration cycle.

10. A method according to Claim 6, 7 or 8 wherein if the boil-off gas stream (BOG1) from at least one hydrogen transport truck is below the previously determined pressure and below the previously determined temperature, the boil off stream is not heated in the first or second heater and is heated in a heat exchanger of the first and/or second cryogenic cold box (80K CB, 20K CB) to cool the hydrogen feed stream (1) to be liquefied.

11. A hydrogen liquefier and boil-off gas recovery apparatus, comprising a liquefier for liquefying hydrogen (1) comprising a first cryogenic cold box (80K CB) for cooling a hydrogen feed stream at a first pressure and a second cryogenic cold box (20K CB) for further cooling the hydrogen so as to liquefy the hydrogen in the second cryogenic cold box or downstream thereof, a loading bay containing at least one hydrogen transport truck, means for providing liquefied hydrogen to a storage or a loading bay containing at least one hydrogen transport truck, to an indirect heat exchanger (BOG HEATER) outside the first and second cryogenic cold boxes, means for sending boil-off gas (BOG1) from at least one hydrogen transport truck in the loading bay to which liquefied hydrogen has been provided to the indirect heat exchanger (BOG HEATER) in order to warm the boil-off gas and means for mixing at least part of the warmed boil-off gas with the hydrogen feed stream upstream of the first cryogenic cold box and/or with hydrogen in a hydrogen refrigeration cycle (LP H2 COMP) used to provide refrigeration for the second cryogenic cold box.

12. An apparatus according to claim 11 wherein the second cryogenic cold box (20K CB) comprises a hydrogen refrigeration cycle and including means for detecting the flowrate of the boil-off gas (BOG1) from the at least one hydrogen transport truck and for sending the warmed boil-off gas from the at least one hydrogen transport truck is sent to the hydrogen refrigeration cycle only if the warmed boil-off gas has a flowrate less than a given threshold.

13. An apparatus according to claim 11 or 12 , including means for detecting the flowrate of the boil-off gas (BOG1) from the at least one hydrogen transport truck and means for mixing at least part of the warmed boil-off gas from the at least one hydrogen transport truck with the hydrogen feed stream (1) upstream of the first cryogenic cold box (80K CB only if the boil-off gas from the at least one hydrogen transport truck has a flowrate more than a given threshold.

14. An apparatus according to any preceding claims 11 to 13 comprising means for detecting the pressure of a boil-off gas stream (BOG(LP)) from at least one hydrogen transport truck, a first heater, a second heater, means for sending the boil-off gas stream (BOG(LP)) from at least one hydrogen transport truck to the first heater if the detected pressure is below a previously determined pressure, means for sending the boil-off stream warmed In the first heater to be mixed with a refrigeration cycle and means for sending the boil-off gas stream (BOG(LP)) from at least one hydrogen transport truck to the second heater if the detected pressure is above a previously determined pressure and means for sending the boil-off stream warmed In the second heater to be mixed with a hydrogen feed stream upstream of the first cryogenic cold box.

15. An apparatus according to any preceding claims 11 to 13 comprising means for detecting the temperature of a boil-off gas stream (BOG(LP)) from at least one hydrogen transport truck, a first heater, a second heater, means for sending the boil-off gas stream (BOG(LP)) from at least one hydrogen transport truck to the first heater if the detected temperature is below a previously determined pressure, means for sending the boil-off stream warmed in the first heater to be mixed with a refrigeration cycle and means for sending the boil-off gas stream (BOG(LP)) from at least one hydrogen transport truck to the second heater if the detected temperature is above a previously determined pressure and means for sending the boil-off stream warmed In the second heater to be mixed with a hydrogen feed stream upstream of the first cryogenic cold box.
